# FASCICULE DE BREVET EUROPEEN

(11) **EP 1 038 738 B1**
(45) Date de publication et mention de la délivrance du brevet: **30.07.2003**
(21) Numéro de dépôt: 00400740.7
(22) Date de dépôt: 16.03.2000
(51) Int. Cl.: B60R 22/48, B60R 21/01, H01R 13/66

(54) **Dispositif de la vérification de la fermeture d'une ceinture de sécurité d'un véhicule automobile et de commande de différentes fonctions**
Vorrichtung zur Prüfung der Verriegelung eines Kraftfahrzeugsicherheitsgurtes und zur Steuerung verschiedener Funktionen
Device for checking the fastening of a motor vehicle seat belt and for controlling different functions

(30) Priorité: 23.03.1999 FR 9903595
(43) Date de publication de la demande: 27.09.2000
(73) Titulaire: Valeo Electronique et Systemes de Liaison, 78180 Montigny le Bretonneux (FR)
(72) Inventeur: Scrabalat, Philippe, 94230 Cachan (FR)
(74) Mandataire: Faber, Jean-Paul

(56) Documents cités:
- DE-A- 19 609 644
- GB-A- 2 310 958
- "COMBINATION OF SENSING & FIRING CIRCUITS ON RESTRAINT COMPONENTS" RESEARCH DISCLOSURE,GB,INDUSTRIAL OPPORTUNITIES LTD. HAVANT, no. 411, juillet 1998 (1998-07), page 930-932 XP000824800 ISSN: 0374-4353

## Description

L'invention se rapporte à un dispositif de vérification de la fermeture d'une ceinture de sécurité d'un véhicule automobile et de commande de différentes fonctions.

On connaît des ceintures de sécurité qui comprennent une boucle formée de deux éléments assemblables, l'un des éléments comprenant un interrupteur inséré sur un circuit électrique d'alimentation d'un signal lumineux ou sonore.

Une telle installation ne permet qu'une seule fonction et pour des raisons de sécurité celle-ci peut être agrémentée d'autres fonctions, par exemple : contrôle du module "Air-bag", contrôle de la tension de la ceinture, détection de la présence de passager, inhibition des modules "Air-bag" des passagers, vérification de la fermeture du harnais d'un siège bébé, etc.... Un tel dispositif comportant les caractéristiques du préambule de la revendication 1 est connu de G-B-A-2 310 958.

L'adjonction de ces différentes fonctions nécessite l'intégration au sein de la boucle de la ceinture de sécurité d'un nombre de capteurs correspondant aux fonctions souhaitées. Les dimensions des boucles limitent obligatoirement l'intégration d'un grand nombre de capteurs.

L'un des buts de la présente invention est, à partir du circuit indiquant la fermeture de la boucle, de réaliser un ensemble qui, sans modifications importantes, et notamment de la boucle, permet de réaliser notamment les différentes fonctions ci-dessus énoncées.

Le dispositif, selon l'invention, est destiné à une ceinture de sécurité de véhicule automobile comprenant une boucle formée d'un élément femelle relié à un point fixe du véhicule et un élément mâle destiné à s'insérer dans l'élément femelle pour la fermeture de la ceinture et un interrupteur inséré sur un circuit d'alimentation d'un signal lumineux ou sonore et fermé par l'engagement de l'élément mâle dans l'élément femelle, ledit dispositif comprend des moyens électroniques de traitement de l'information de la fermeture de l'interrupteur et de transmission de celle-ci à différentes sorties permettant le branchement et l'alimentation de différents dispositifs, et un connecteur inséré sur le circuit d'alimentation du signal lumineux ou sonore comporte ces moyens électroniques.

Grâce à cette disposition, on peut alimenter directement à partir du connecteur le contrôle du module "Air-bag", le contrôle de la tension de la ceinture de sécurité, la fermeture du harnais du siège bébé, etc...

Suivant une autre caractéristique, le dispositif comprend une carte électronique directement surmoulée dans le connecteur et agencée pour délivrer aux différentes sorties des courants électriques ayant des intensités différentes.

Enfin, la carte électronique comprend, inséré sur le circuit électrique de l'interrupteur, un circuit d'amplification transistorisé destiné au contrôle d'un module "Air-bag", un relais pour la commande du contrôle de la tension de la ceinture de sécurité et un circuit transistorisé d'alimentation du signal lumineux ou sonore de fermeture de la ceinture.

L'invention va maintenant être décrite avec plus de détails en se référant à un mode de réalisation particulier donné à titre d'exemple seulement et représenté aux dessins annexés, dans lesquels :
Figure 1 est une vue schématique d'une ceinture de sécurité de véhicule automobile comportant un dispositif, selon l'invention.
Figure 2 montre le schéma de la carte électronique du connecteur.

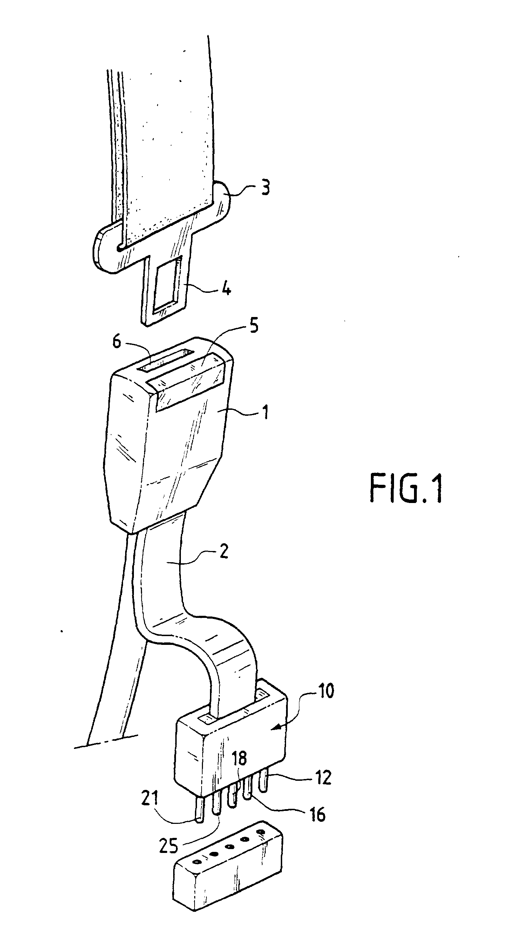

A la figure 1, on a représenté une ceinture de sécurité pour véhicule automobile comprenant une boucle formée d'un élément femelle 1 avec une sangle 2 ou une tige solidaire, par son extrémité libre, d'un point fixe du véhicule.

La boucle 1 est complétée par un élément mâle présentant un anneau 4 destiné à s'insérer dans une fente 6 et à coopérer avec un verrou de l'élément femelle 1 susceptible d'être effacé par un poussoir 5.

D'une manière connue dans l'élément femelle 1 est logé un interrupteur qui est commandé par l'introduction de l'anneau 4 dans la fente 6.

L'interrupteur peut être mécanique ou du type connu sous le nom de "capteur à effet hall".

Dans la technique antérieure, cet interrupteur est simplement destiné à fermer un circuit de signalisation indiquant que la ceinture est fermée ou non, ce circuit de signalisation comprenant un signal sonore ou lumineux.

Dans le mode de réalisation représenté, sur le circuit de l'interrupteur est interposé un connecteur 10.

Ce connecteur 10 se présente sous la forme d'un boîtier surmoulé sur une carte électronique.

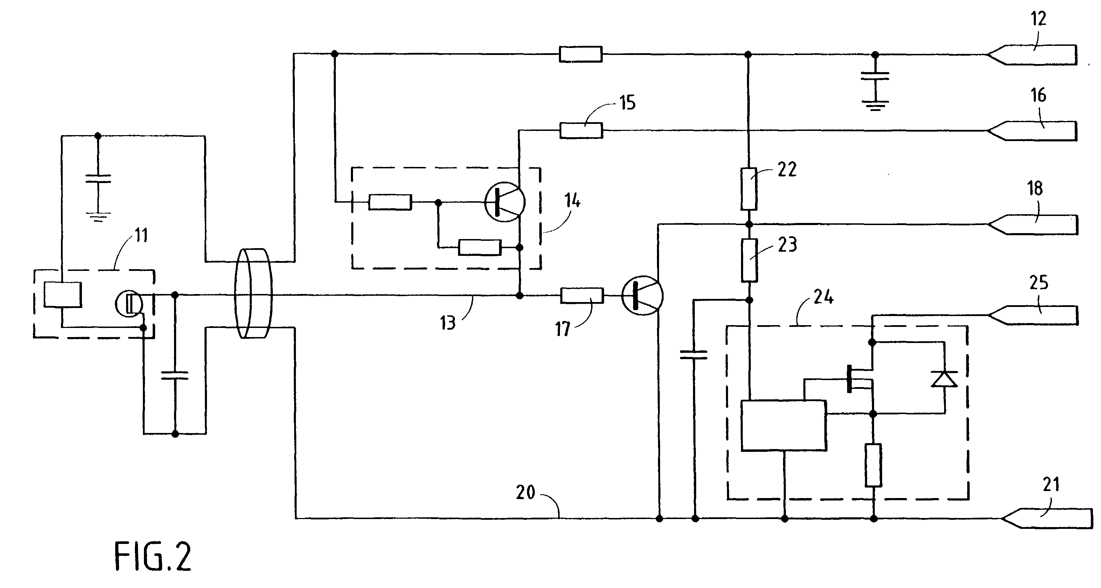

La figure 2 montre le schéma de la carte.

Sur cette figure, la référence 11 désigne le capteur a effet hall qui est alimenté à partir d'une entrée 12, l'alimentation des différents circuits s'effectuant à travers une ligne 13 sur laquelle est inséré l'émetteur d'un premier transistor 14 dont la base est reliée à la ligne d'entrée 12, le collecteur étant relié à travers une résistance à une sortie 16 servant, dans cet exemple, à l'alimentation du circuit de commande d'un "Air-bag", le déclanchement du sytème "Air-bag" étant différent suivant que la ceinture de sécurité est ou n'est pas attachée.

Ainsi, on réalise un amplificateur afin que le courant délivré à la sortie 16 soit différent de celui de l'alimentation.

La ligne 13 alimente à travers une résistance 17 la base d'un second transistor qui délivre un courant d'un niveau différent de celui de la sortie 16, à une sortie 18 sur laquelle peut être inséré le signal correspondant à la fermeture et à l'ouverture de la boucle de la ceinture de sécurité, signal sonore ou visuel.

A partir de la ligne d'entrée 12 est alimenté à travers des résistances 22 et 23 un relais 24 relié à une borne de sortie 25 pour l'alimentation d'un moteur électrique, par exemple pour régler la tension de la ceinture de sécurité afin que pour l'utilisateur elle ne soit ni trop lâche, ni trop tendue.

Le circuit de retour s'effectue par une ligne 20 avec une borne 21 reliée à la masse.

Les différentes sorties du connecteur 10 peuvent être utilisées pour toutes sortes de fonctions, par exemple, vérification du siège enfant, etc...

Bien entendu, l'invention n'est pas limitée au mode de réalisation qui vient d'être décrit et représenté. On pourra y apporter de nombreuses modifications de détail sans sortir pour cela du cadre de l'invention.

## Revendications

1. Dispositif de vérification de la fermeture d'une ceinture de sécurité d'un véhicule automobile et de commande de différentes fonctions dans lequel la ceinture comprend une boucle formée d'un élément femelle (1) relié à un point fixe du véhicule et un élément mâle (3, 4) destiné à s'insérer dans l'élément femelle pour la fermeture de la ceinture et un interrupteur inséré sur un circuit d'alimentation d'un signal lumineux ou sonore et fermé par l'engagement de l'élément mâle (3, 4) dans l'élément femelle (1), et comportant des moyens électroniques (11, 14, 24) de traitement de l'information de la fermeture de l'interrupteur et de transmission de celle-ci à différentes sorties (16, 18, 25) permettant le branchement et l'alimentation de différents dispositifs, **caractérisé en ce qu'**il comprend un connecteur (10) inséré sur le circuit d'alimentation du signal lumineux ou sonore et qui comporte ces moyens électroniques (11, 14, 24).

2. Dispositif de vérification de la fermeture d'une ceinture de sécurité d'un véhicule automobile, selon la revendication 1, **caractérisé en ce qu'**il comprend une carte électronique directement surmoulée dans le connecteur (10) et agencée pour délivrer aux différentes sorties des courants électriques ayant des intensités différentes.

3. Dispositif de vérification de la fermeture d'une ceinture de sécurité d'un véhicule automobile, selon les revendications 1 et 2, **caractérisé en ce que** la carte électronique comprend, inséré sur le circuit électrique de l'interrupteur, un circuit d'amplification transistorisé destiné au contrôle d'un module "Air-bag", un relais pour la commande de contrôle de la tension de la ceinture de sécurité et un circuit transistorisé d'alimentation du signal lumineux ou sonore de fermeture de la ceinture.

## Patentansprüche

1. Vorrichtung zum Überprüfen der Verriegelung eines Sicherheitsgurtes eines Kraftfahrzeuges und zur Steuerung verschiedener Funktionen, bei der der Gurt eine Schnalle aufweist, die aus einem Steckbuchsenelement (1) gebildet ist, das mit einem Festpunkt des Fahrzeuges verbunden ist, und mit einem Einsteckelement (3, 4), das zum Einsetzen in das Steckbuchsenelement vorgesehen ist, um den Gurt zu verriegeln, einem in eine Versorgungsschaltung für ein Lichtoder Schallsignal eingefügten Schalter, der durch das Einsetzen des Einsteckelementes (3, 4) in das Steckbuchsenlement (1) geschlossen wird, und mit elektronischen Mitteln (11, 14, 24) für die Verarbeitung der Information des Schließens des Schalters und deren Übertragung auf verschiedene Ausgänge (16, 18, 25) für Anschluß und Versorgung verschiedener Geräte, **dadurch gekennzeichnet, dass** sie einen in die Versorgungsschaltung für das Licht oder Schallsignal eingefügten Verbinder (10) besitzt, welcher die elektronischen Mittel (11, 14, 24) aufweist.

2. Vorrichtung zum Überprüfen der Verriegelung eines Sicherheitsgurtes eines Kraftfahrzeuges, nach Anspruch 1, **dadurch gekennzeichnet, dass** sie eine Elektronikschaltungskarte aufweist, die in den Verbinder (10) unmittelbar eingegossen und dazu eingerichtet ist, an verschiedene Ausgänge elektrische Ströme unterschiedlicher Stärke zu liefern.

3. Vorrichtung zum Überprüfen der Verriegelung eines Sicherheitsgurtes eines Kraftfahrzeuges, nach den Ansprüchen 1 und 2, **dadurch gekennzeichnet, dass** die Elektronikschaltungskarte, eingeschaltet in die elektrische Schaltung des Schalters, eine transistorisierte Verstärkerschaltung, die dazu vorgesehen ist, ein "Air-bag"-Modul zu überwachen, ein Relais zur Betätigung der Überwachung für die Spannung des Sicherheitsgurtes sowie eine transistorisierte Versorgungsschaltung für das Licht- oder Schallsignal der Verriegelung des Gurtes aufweist.

## Claims

1. A device for checking the fastening of a safety belt of a motor vehicle and for controlling different functions in which the belt comprises a buckle formed of a female element (1) connected to a fixed point of the vehicle and a male element (3, 4) intended to be inserted into the female element for the fastening of the belt and a switch inserted onto a circuit for supplying a luminous or acoustic signal and closed by the engagement of the male element (3, 4) in the female element, and comprising electronic means (11, 14, 24) for processing information relating to the closing of the switch and for transmitting said information to different outputs (16, 18, 25) which allows the connection and the supply of different devices,
**characterised in that** it comprises a connector (10) inserted onto the circuit for supplying the luminous or acoustic signal and which comprises these electronic means (11, 14, 24).

2. A device for checking the fastening of a safety belt of a motor vehicle according to Claim 1,
**characterised in that** it comprises an electronic board directly moulded into the connector (10) and designed to deliver electric currents having different intensities to the different outputs.

3. A device for checking the fastening of a safety belt of a motor vehicle according to Claims 1 and 2,
**characterised in that** the electronic board comprises, inserted onto the electric circuit of the switch, a transistorised amplification circuit intended to check an airbag module, a relay for controlling the checking of the tension of the safety belt and a transistorised circuit for supplying the luminous or acoustic signal indicating the fastening of the belt.
